# EUROPEAN PATENT APPLICATION

(11) **EP 4 524 404 A1**
(43) Date of publication of application: **19.03.2025**
(21) Application number: 24199986.1
(22) Date of filing: 12.09.2024
(51) Int. Cl.: F15B 13/02, F15B 21/041, F15B 11/17, B01D 29/15, B01D 35/02

(54) **IMPROVED HYDRAULIC DISTRIBUTION MANIFOLD**

(30) Priority: 14.09.2023 IT 202300018915
(71) Applicant: CNH Industrial Italia S.p.A., 10156 Torino (IT)
(72) Inventor: Lucente, Aldo, 10156 Turin (IT); Terzi, Stefano, 10156 Turin (IT); Sedoni, Enrico, 10156 Turin (IT); Orlandi, Simone, 10156 Turin (IT)
(74) Representative: CNH Industrial IP Department

(57) **Abstract**

A distribution manifold (50) for a hydraulic arrangement (5), comprising an outer casing (60), which extends along a reference axis (A), is provided with a first inlet (52) and a second inlet (54) adapted to receive hydraulic fluid at inlet, a first outlet (56) and a second outlet (58) adapted to provide at outlet hydraulic fluid, and defines an inner chamber (62) adapted to put said first inlet (52), said second inlet (54), said first outlet (56) and said second outlet (58) in fluid communication to each other; and an inner tubular portion (68), which is arranged at least partially within the inner chamber (62) of said outer casing (60); the inner tubular portion (68) being adapted to divide said inner chamber (62) in a first chamber portion (62a) in fluid communication with said first inlet (52) and said second inlet (54), and in a second chamber portion (64b) in fluid communication with said first chamber portion (64a) and with said first outlet (56) and said second outlet (58).

## Description

### TECHNICAL FIELD

The present invention relates to a hydraulic distribution manifold for a hydraulic arrangement of a work vehicle, in particular for an agricultural vehicle such as a tractor.

The present invention finds its preferred, although not exclusive, application in a hydraulic distribution manifold for a high-pressure hydraulic circuit of a work vehicle adapted to selectively supply hydraulic actuated work implements carried by the same work vehicle. Reference will be made to this application by way of the example below, without however losing in generality.

### BACKGROUND OF THE INVENTION

As is known, work vehicles such as tractors are adapted to carry or tow hydraulically actuated work implements, for instance mowers, balers, forage harvesters, manure spreaders, seeders, plows, tipping trailers or the like.

In particular, such work vehicles are provided with a hydraulic system, also commonly referred to as high-pressure hydraulic circuit, configured to selectively provide a pressurize flow of hydraulic fluid towards said work implements, in order to power these latter.

More in detail, such high-pressure hydraulic circuit is configured to provide at outlet flowrates ranging from 150 litres per minute to 220 litres per minute, at predetermined pressure levels.

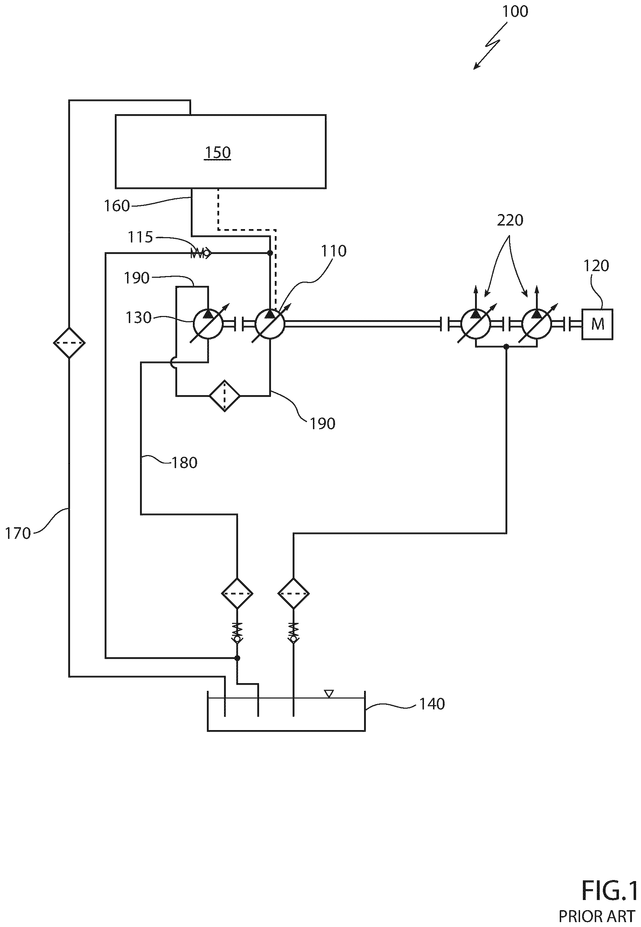

For instance, with reference to Figure 1, reference number 100 denotes a hydraulic system as known in the art.

Hydraulic system 100 comprises at least a main hydraulic pump 110, which is carried by the engine 120 of the work vehicle and is adapted to provide at outlet the pressurized flow of hydraulic fluid.

In addition, hydraulic system 100 comprises a charging pump 130, also referred to as anti-cavitation auxiliary hydraulic pump, which is carried by the engine 120.

The charging pump 130 is adapted to suck the hydraulic fluid from a tank 140 and to provide a pressurized flow of said hydraulic fluid towards the inlet/suction/intake of the main hydraulic pump 110, to keep pressurized the suction of the main pump 110 and accordingly avoid the cavitation of the hydraulic fluid sucked by the main pump 110.

In addition, a pressure relief valve 115 is arranged downstream the outlet of the main hydraulic pump 110 and is configured to put the outlet of the same hydraulic pump 110 in fluid communication with tank 140 when the pressure of the hydraulic fluid provided at outlet by hydraulic pump 110 exceeds a predetermined threshold.

In addition, hydraulic system 100 further comprises a valve arrangement 150, also referred to as hydraulic distributor, which is adapted to selectively put in fluid communication the outlet of pump 110 with the work implement carried by the work vehicle, to power this latter. In particular, valve arrangement 150 comprises a plurality of double effect hydraulic distributors.

As schematically illustrated in Figure 1, hydraulic system 100 has a closed center architecture and comprises a hydraulic delivery line 160 fluidly connecting the outlet of pump 110 with the valve arrangement 150, a hydraulic return line 170 fluidly connecting the valve arrangement 150 with tank 140, a hydraulic suction line 180 fluidly connecting tank 140 with the suction of charging pump 130, and a hydraulic feed line 190 fluidly connecting the outlet of charging pump 130 with the inlet of pump 110. In addition, hydraulic filers are usually arranged along lines 170, 180 and 190.

Moreover, as schematically illustrated in Figure 1, engine 120 may carry further hydraulic pumps 220 configured to suck hydraulic fluid from tank 140 and adapted to provide a pressurized flow of hydraulic fluid towards other hydraulic systems of the same work vehicle, such as a lubrication system, a hydraulic power steering system and/or the like.

Unfortunately, the above-mentioned hydraulic circuit is not able to provide at outlet a flowrate high enough to satisfy the current requirements of larger work vehicles or tractors that need to carry many implements. In fact, most modern and larger work vehicles require high-pressure hydraulic circuits able to provide to the work implement flowrates of the pressurized hydraulic fluid up to 360 lpm or above.

In view of the above, the need is felt to provide a hydraulic arrangement able to increase the flowrate of the hydraulic fluid provided to the work implement towed or carried by the work vehicle.

At the same time, the need is felt to reduce the energy consumptions of such high-pressure hydraulic circuit, to reduce the overall fuel consumptions of the work vehicle.

Aim of the present invention is to satisfy the above-mentioned need in an optimized and cost-effective manner.

### SUMMARY OF THE INVENTION

The aforementioned aims are reached by distribution manifold and by a hydraulic arrangement as claimed in the appended set of claims.

### BRIEF DESCRIPTION OF DRAWINGS

For a better understanding of the present invention, a preferred embodiment is described in the following, by way of a non-limiting example, with reference to the attached drawings, wherein:
- Figure 1 illustrates schematically a high-pressure hydraulic circuit as known in the art;
- Figure 2 illustrates schematically a first embodiment of a work vehicle realized according to the present invention;
- Figure 3 is a prospective view of a component of the work vehicle illustrated in Figure 2, with parts removed for clarity;
- Figure 4 is a cross section along the frontal plane of the component illustrated in Figure 3, with parts removed for clarity; and
- Figure 5 is a cross section along the transverse plane of the component illustrated in Figure 3, with parts removed for clarity; and
- Figures 6 illustrates schematically a second embodiment of a work vehicle realized according to the present invention.

### DETAILED DESCRIPTION OF THE INVENTION

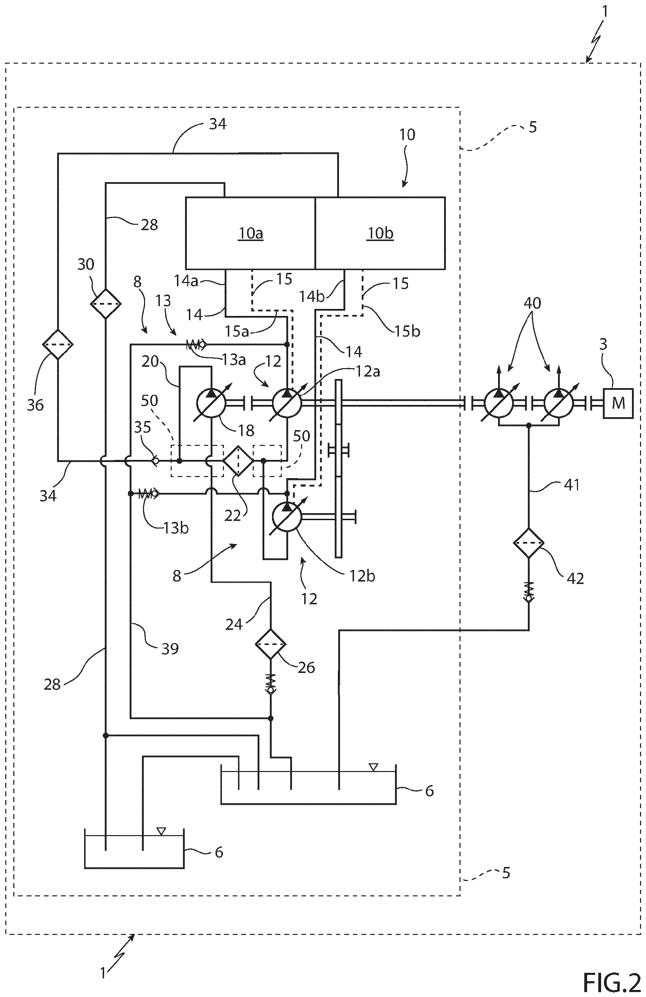

With reference to Figure 2, number 1 denotes a work vehicle, in particular an agricultural vehicle such as a tractor.

Work vehicle 1 comprises a body (not illustrated) movable on the ground via a plurality of ground engaging wheels or tracks.

As known, work vehicle 1 further comprises an engine 3, which is operatively connected to the ground engaging wheels and is adapted to provide torque to allow motion of the work vehicle body with respect to the ground.

Engine 3 is preferably an internal combustion engine, such as a diesel or a methane powered internal combustion engine. Alternatively, engine 3 may be an electric motor.

As always known, work vehicle 1 is adapted to carry or tow hydraulically actuated work implements such as, for instance, mowers, balers, forage harvesters, manure spreaders, seeders, plows, tipping trailers or the like.

More in detail, work vehicle 1 comprises a connection assembly comprising a drawbar and/or a hydraulic powerlift adapted to be mechanically connected to such work implement.

With reference to the exemplary embodiment illustrated in Figure 2, work vehicle 1 further comprises a hydraulic arrangement or hydraulic system 5, also referred to as high-pressure hydraulic circuit, which is adapted to be operatively connected to the work implement towed or carried by the work vehicle and is configured to provide a pressurized flow of hydraulic fluid towards the same work implement, to power this latter.

In particular, hydraulic arrangement 5 comprises a tank 6 adapted to contain hydraulic fluid, preferentially hydraulic oil.

In addition, hydraulic arrangement 5 comprises a pumping assembly 8, which is adapted to be carried by engine 3 and is configured to suck the hydraulic fluid from tank 6 and to provide at outlet a pressurized flow of such hydraulic fluid.

In addition, hydraulic arrangement 5 comprises a valve assembly 10, which is fluidly connected downstream the pumping assembly 8 and is adapted to be fluidly connected to the work implement towed or carried by the work vehicle 1.

In particular, valve assembly 10 is configured to be fluidly interposed between the delivery of pumping assembly 8 and the hydraulic actuators of the work implement towed or carried by the work vehicle 1, in order to be able to selectively route/distribute the hydraulic fluid provided at outlet by pumping assembly 8 to the hydraulic actuators of the same work implement, to operate these latter.

As known, valve assembly 10 preferably comprises a plurality of hydraulic distributors, in particular double effect hydraulic distributors, which are arranged in parallel to each other, are fluidly connected to the outlet/ delivery of pumping assembly 8 and are each adapted to be connected to a correspondent hydraulic actuator of the work implement towed or carried by the work vehicle 1, to selectively operate the corresponding hydraulic actuators.

With reference to the exemplary embodiment illustrated in Figure 2, pumping assembly 8 comprises pumping means 12, which are carried by engine 3 and are adapted feed the flow of pressurized fluid towards the valve assembly 10.

More in detail, pumping means 12 are mechanically connected to engine 3, in order to be driven in rotation.

In addition, the outlet/delivery of pumping means 12 is fluidly connected to valve assembly 10 via at least one delivery line/conduit/pipe/duct 14.

Moreover, hydraulic arrangement 5 comprises at least one load sensing hydraulic line 15, which is operatively connected between pumping means 12 and valve assembly 10, in order to adapt the operation of pumping means 12 to the operational condition of valve assembly 10, in a manner per se known and therefore not further described.

With reference to the exemplary embodiment illustrated in Figure 2, pumping assembly 8 further comprises a hydraulic pump 18, also referred to as charging pump or as anti-cavitation auxiliary pump, which is adapted to suck the hydraulic fluid from tank 6 and to feed a pressurized flow of the hydraulic fluid towards the inlet/suction/intake of the pumping means 12, so at to keep the same inlet of the pumping means 12 pressurized and avoid cavitation of the hydraulic fluid sucked by pumping means 12.

Preferably, charging pump 18 is mechanically carried by engine 3, in order to be driven in rotation.

In addition, hydraulic arrangement 5 preferably comprises a hydraulic feed line 20 fluidly connecting the outlet of charging pump 18 with the inlet of pumping means 12.

Preferably, hydraulic arrangement 5 further comprises filtering means 22, which are fluidly interposed between charging pump 18 and pumping means 12 and is adapted to remove any impurities present in the hydraulic fluid fed by charging pump 18 towards pumping means 12.

In other words, filtering means 22 are arranged along hydraulic feed line 20.

In addition, hydraulic arrangement 5 preferably comprises a hydraulic suction line 24 fluidly connecting the tank 6 with the inlet of charging pump 18.

Preferably, hydraulic arrangement 5 further comprises a filtering device 26, which is arranged upstream the suction of charging pump 18 and is adapted to remove any impurities present in the hydraulic fluid sucked from tank 6.

With reference to the exemplary embodiment illustrated in Figure 2, hydraulic arrangement 5 preferably comprises a hydraulic return or discharge line 28, fluidly connecting the valve arrangement 10 with tank 6, so as to allow the hydraulic fluid to be routed back from valve arrangement 10 to tank 6.

Preferably, hydraulic arrangement further comprises another filtering device 30 arranged along hydraulic return line 28, i.e. operatively interposed between the valve arrangement 10 and the tank 6.

With reference to the exemplary embodiment illustrated in Figure 2, hydraulic arrangement further comprises a hydraulic recirculation line 34, which is adapted to fluidly connect the valve arrangement 10 with the inlet of pumping means 12.

More in detail, hydraulic recirculation line 34 is preferably configured to directly fluidly connect the valve arrangement 10 with the inlet of pumping means 12.

In even more detail, hydraulic recirculation line 34 is preferably adapted to provide the hydraulic fluid exiting valve arrangement 10 directly back to the inlet of pumping means 12, without discharging the hydraulic fluid to tank 6.

Preferably, hydraulic recirculation line 34 is arranged in parallel to the hydraulic return line 28.

In other words, hydraulic recirculation line 34 is preferably separate and distinct from hydraulic return line 28.

Accordingly, part of the hydraulic fluid exiting valve arrangement 10 may be discharged to tank 6 via hydraulic return line 28 and part of the hydraulic fluid exiting valve arrangement 10 may be fed directly back to pumping means 12 via hydraulic recirculation line 34.

In addition, hydraulic arrangement 5 preferably comprises a check valve 35 or non-return valve arranged along hydraulic recirculation line 34, i.e. operatively interposed between valve arrangement 10 and pumping means 12.

Preferably, hydraulic arrangement 5 further comprises a filtering device 36 arranged along hydraulic recirculation line 34, i.e. operatively interposed between valve arrangement 10 and pumping means 12.

Filtering device 36, in particular, is adapted to retain any impurities present in the hydraulic fluid flowing through the hydraulic recirculation line 34.

With reference to the exemplary embodiment illustrated in Figure 2, valve arrangement 10 has preferably a modular structure and comprises at least two modules, i.e. at least two valve means 10a and 10b, which are fluidly connected downstream pumping means 12 and are each adapted to operatively connected to a different hydraulic actuator of the work implement towed or carried by work vehicle 1.

Valve means 10a and 10b preferably comprise hydraulic distributors, in particular, double effect hydraulic distributors.

More in detail, valve means 10a, 10b may comprise a four-way three-position hydraulic valves.

Preferably, the two ports of valve means 10a and 10b may be respectively connected to the outlet of pumping means 12 via the hydraulic delivery line 14, to tank 6 via return line 28 and to the inlet of pumping means 12 via recirculation line 34. In addition, the other two ports of valve means 10a and 10b are fluidly connected to a correspondent hydraulic actuator carried by the work implement attached to the work vehicle 1.

In the first position, valve means 10a and 10b prevents fluid communication between pumping means 12 and the work implement attached to work vehicle 1, and route the fluid provided by pumping means 12 back to tank 6 via return line 28 and/or back to pumping means 12 via recirculation line 34. In the second and in the third position, on the other hand, valve means 10a and 10b puts the outlet of pumping means 12 in fluid communication with the respective hydraulic actuators carried by the work implement, to operate these latter in a first direction and in a second direction opposite to the first one.

With reference to the exemplary embodiment illustrated in Figure 2, in particular, a first one between valve means 10a and valve means 10b is fluidly connected to tank via return line 28, and a second one between valve means 10a and valve means 10b is fluidly connected to the inlet of pumping means 12 via recirculation line 34, so that the hydraulic fluid exiting from the first one between valve means 10a and valve means 10b may be routed back to tank 6 and the hydraulic fluid exiting from the second one between valve means 10a and valve means 10b may be routed to the inlet of pumping means 12.

More in detail, in the illustrated example, valve means 10a is preferably fluidly connected to tank 6 via return line 28, and valve means 10b is preferably fluidly connected to the inlet of pumping means 12 via recirculation line 34.

In alternative, according to a different embodiment not illustrated, valve means 10a may be fluidly connected to the inlet of pumping means 12 via recirculation line 34 and valve means 10b may be fluidly connected to tank 6 via return line 28.

With reference to the exemplary embodiment illustrated in Figure 2, pumping means 12 preferably comprises a plurality of pumps 12a and 12b arranged in parallel to each other.

In particular, hydraulic pumps 12a and 12b are both carried by engine 3, i.e. are both mechanically connected to engine 3 to be driven in rotation.

Preferably, the inlet of both hydraulic pumps 12a and 12b is fluidly connected to the outlet of charging pump 18, via feed line 20.

In addition, the inlet of both hydraulic pumps 12a and 12b is preferably fluidly connected to the recirculation line 34.

More in detail, the inlet of both hydraulic pumps 12a and 12b is preferably fluidly connected to the second one between valve means 10a and valve means 10b via the recirculation line 34.

The outlet of pumps 12a and 12b, on the other hand, is preferably fluidly connected respectively to valve 10a and valve 10b, preferably via a corresponding delivery line, respectively denoted with reference numbers 14a and 14b.

In addition, hydraulic arrangement preferably comprises two load sensing hydraulic line 15a and 15b, each operatively interposed between a corresponding pump 12a and 12b and a corresponding valve assembly 10a and 10b.

Preferably, load sensing lines 15a and 15b are separated to each other and are each configured to control the operation of the corresponding pump 12a and 12b according to the load at the corresponding valve assembly 10a and 10b.

With reference to the exemplary embodiment illustrated in Figure 2, hydraulic pump 12a and/or hydraulic pump 12a are variable displacement pumps, in particular variable displacement axial piston pumps.

In addition, hydraulic arrangement 5 preferably comprises a bypass line 39 fluidly connecting the outlet of pumping means 12, in particular of hydraulic pump 12a and/or 12b with tank 6.

Hydraulic arrangement 5 preferably further comprises a pressure relief valve 13 arranged downstream pumping means 12 along bypass line 39 and configured to open when the pressure of the hydraulic fluid provided at outlet by pumping means 12 exceeds a predetermined threshold, for instance 250 bars, in order to discharge such hydraulic fluid to tank 6 via bypass line 39.

In addition, bypass line 39 is preferably fluidly connected to suction line 24, preferably upstream filtering device 26, so that charging pump 18 may be able to suck again the hydraulic fluid flowing through bypass line 39.

Preferably, hydraulic arrangement 5 comprises a pair of pressure relief valves 13a and 13b respectively associated with hydraulic pump 12a and hydraulic pump 12b.

With reference to the exemplary embodiment illustrated in Figure 2, work vehicle 1 preferably further comprises one or more additional/auxiliary hydraulic pumps 40, which are carried by engine 3 and are adapted to suck fluid from tank 6 and to provide at outlet a pressurized of hydraulic fluid, for instance towards a lubrication system, a power steering system and/or towards other hydraulically actuated systems of work vehicle 1.

More in detail, the suction of pump/s 40 is preferably fluidly connected to tank 6 via a suction line 41. Preferably, a filtering device 42 is arranged along suction line 41, i.e., between tank 6 and hydraulic pump/s 40.

With reference to the exemplary embodiment illustrated in Figures 2 to 5, hydraulic arrangement 5 further comprises a distribution manifold 50, which is fluidly connected between the feed line 20, the recirculation line 34 and pumping means 12.

More in detail, distribution manifold 50 is adapted to distribute the hydraulic fluid coming from feed line 20 and recirculation line 34 to the inlets of pumping means 12.

With reference to Figure 2, distribution manifold 50 is fluidly connected between the feed line 20, the recirculation line 34 and the two inlets of hydraulic pumps 12a and 12b.

In particular, distribution manifold 50 is adapted to distribute the hydraulic fluid coming from feed line 20 and recirculation line 34 to the two inlets of hydraulic pumps 12a and 12b.

In other words, distribution manifold 50 preferably comprises a first inlet opening 52, which is adapted to be fluidly connected to the feed line 20.

In addition, distribution manifold 50 preferably comprises a second inlet opening 54, which is adapted to be fluidly connected to the recirculation line 34.

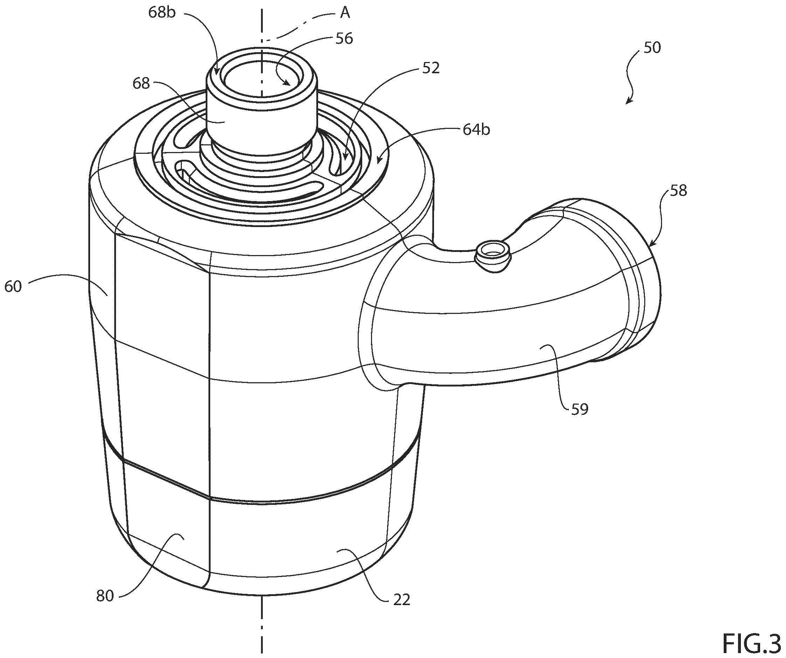

With reference to the exemplary embodiment illustrated in Figure 3, 4 and 5, distribution manifold 50 preferably further comprises a first outlet opening 56 and a second outlet opening 58, which are adapted to be fluidly connected respectively to the inlet of hydraulic pump 12a and to the inlet of hydraulic pump 12b.

In addition, distribution manifold 50 is preferably configured to carry filtering means, which is adapted to be fluidly interposed between the inlet openings 52 and 54 and the outlet openings 56 and 58, and is adapted to filter the hydraulic fluid flowing through the same distribution manifold 50.

Preferably, the filtering means carried by distribution manifold are the filtering means 22.

With reference to the exemplary embodiment illustrated in Figure 3, 4 and 5, distribution manifold 50 comprises an outer casing/body 60, extending along a reference axis A and defining an inner chamber or cavity 62 in fluid communication with inlets 52 and 54 and outlets 56 and 58. Chamber 62 is adapted to put inlets 52 and 54 in fluid communication with outlets 56 and 58 and, in use, is adapted to be traversed by the hydraulic fluid, in order to allow the distribution of the fluid coming from inlets 52 and 54 towards outlets 56 and 58.

Preferably, outer casing 60 is substantially prismatic in shape, in particular it is substantially cylindrical in shape.

More in detail, outer casing 60 is preferably substantially tubular in shape and it preferably extends locally substantially coaxial to reference axis A.

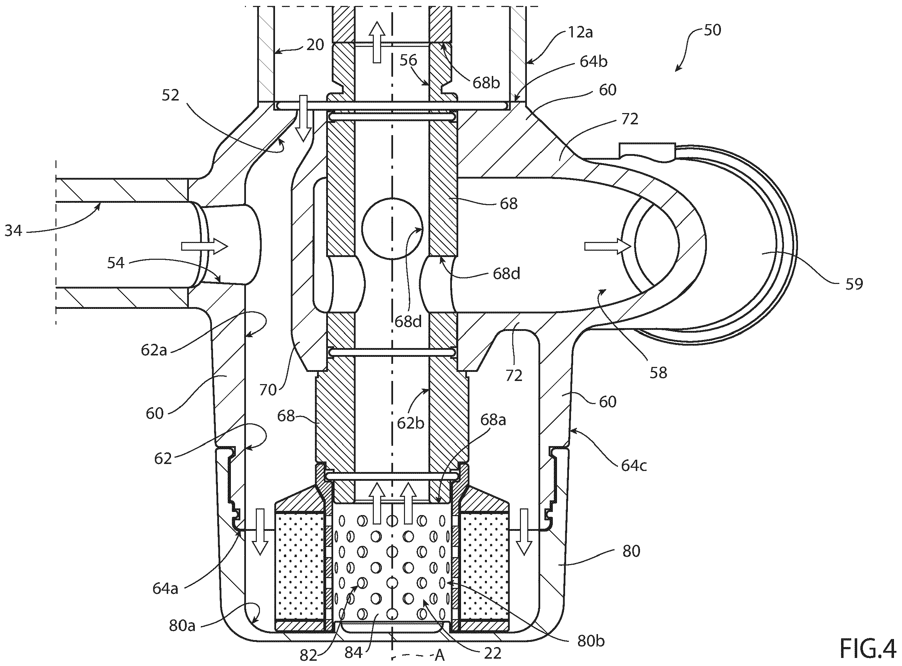

With reference to the exemplary embodiment illustrated in Figure 4, outer casing 60 comprises a first axial end 64a adapted to be connected, in a removable manner, to filtering means 22.

More in detail, first axial end 64a preferably comprises an annular wall, which extends about reference axis A and preferably lays on a plane substantially orthogonal to the reference axis A.

In even more detail, first axial end 64a preferably comprises a coupling portion adapted to be connected to a complementary shaped coupling portion of the filtering means 22, preferably in an easily removable manner.

In addition, outer casing 60 preferably comprises a second axial end 64b, opposite to the first axial end 64a, which is adapted to be connected, in a removable manner, to feed line 20.

As schematically represented in Figure 4, second axial end 64b is preferably adapted to be coupled to hydraulic pumps 12a, in particular to the bottom of the same hydraulic pump 12a, so that the chamber 62 of the casing 60 may be in fluid communication with the feed line 20 passing through hydraulic pump 12a and the inlet of the same hydraulic pump 12a.

More in detail, second axial end 64b preferably comprises an annular wall, which extends about reference axis A and preferably lays on a plane substantially orthogonal to reference axis A.

In even more detail, second axial end 64b preferably comprises a coupling portion adapted to be connected to a complementary shaped coupling portion of feed line 20, preferably in an easily removable manner.

The coupling portion of second axial end 64b is preferably configured as a banjo fitting, i.e., a fitting configured to connect the corresponding portion of feed line 20 in a freely axially rotatable manner.

In addition, outer casing 60 preferably comprises a tubular radial wall 64c extending substantially locally coaxial to reference axis A between the two ends 64a and 64b, preferably substantially without interruptions.

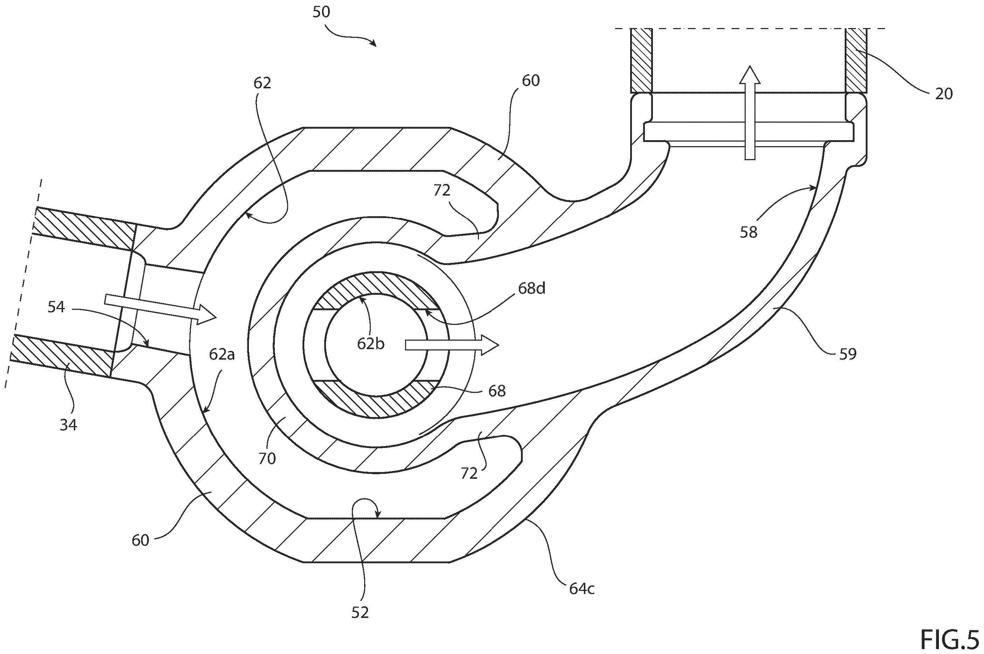

With reference to the exemplary embodiment illustrated in Figure 4 and 5, inlet opening 54 is preferably realized on tubular radial wall 64c of outer casing 60.

In addition, also outlet opening 58 is preferably realized on tubular radial wall 64c, opposite to inlet opening 52.

In other words, both inlet opening 52 and outlet opening 58 are preferably realized on tubular wall 64c and are arranged facing/opposite each other.

With reference to the exemplary embodiment illustrated in Figure 3, 4 and 5, outlet opening 58 is preferably delimited by a protruding conduit 59, which extends cantilevered from the outer casing 60 and is adapted to connected to the inlet of hydraulic pump 12b.

In addition, protruding conduit 59 preferably extends in a radial direction and is preferably arc-shaped.

In other words, protruding conduit 59 preferably lays on a plane substantially orthogonal to the reference axis A.

With reference to the exemplary embodiment illustrated in Figure 4, inlet opening 52 is preferably provided with a coupling portion configured to be connected to a complementary shaped coupling portion of recirculation line 34, advantageously in an easily removable manner.

More in detail, the coupling portion of inlet opening 52 is preferably configured as a banjo fitting, i.e., a fitting configured to connect the two corresponding portion in a freely axially rotatable manner.

In addition, outlet opening 58 is preferably provided with a coupling portion configured to be connected to a complementary shaped coupling portion of the inlet of hydraulic pump 12b, advantageously in an easily removable manner.

More in detail, the coupling portion of outlet opening 58 is preferably configured as a banjo fitting, i.e., a fitting configured to connect to the corresponding coupling portion of the inlet of hydraulic pump 12b in a freely axially rotatable manner.

In addition, coupling portion of outlet opening 58 is preferably realized on the distal end of protruding conduit 59.

With reference to the exemplary embodiment illustrated in Figure 4 and 5, distribution manifold 50 preferably further comprises an inner tubular sleeve/element/body 68, which is carried at least partially within chamber 62 and is preferably arranged locally substantially coaxial to reference axis A.

More in detail, inner tubular sleeve 68 is preferably substantially tubular cylindrical in shape.

With reference to the exemplary embodiment illustrated in Figure 4, inner tubular sleeve 68 preferably comprises a first axial end 68a, which is adapted to be fluidly connected to filtering means 22, preferably in a removable manner.

In addition, inner tubular sleeve 68 preferably comprises a second axial end 68b, opposite to the first axial end 68a, which is adapted to be fluidly connected to the inlet of one of hydraulic pump 12a or 12b, via feed line 20.

Outlet opening 56 is preferably defined by second axial end 68b of inner tubular sleeve 68.

Inlet opening 52, on the other hand, is preferably defined in the annular gap between the second end 64b of casing 60 and the second end 68b of inner tubular sleeve 68.

In addition, second end 68b of inner tubular sleeve 68 is preferably further provided with a coupling portion adapted to be connected to a complementary shaped coupling portion of the inlet of hydraulic pump 12a, advantageously in an easily removable manner.

More in detail, the coupling portion of outlet opening 56 is preferably configured as a banjo fitting, i.e., a fitting configured to connect to the corresponding coupling portion of the inlet of hydraulic pump 12a in a freely axially rotatable manner.

In addition, inner tubular sleeve 68 preferably comprises a tubular radial wall extending substantially locally coaxial to the reference axis A, between the two ends 68a and 68b, preferably substantially without interruptions.

Inner tubular sleeve 68 is preferably adapted to divide the chamber 62 of outer casing 60 in a first chamber portion 62a and in a second chamber portion 62b.

First chamber portion 62a is preferably defined between the tubular radial wall 64c of outer casing 60 and tubular radial wall 68c of inner tubular sleeve 68. First chamber portion 62a is preferably in fluid communication with inlet 52 and with inlet 54. In other words, first portion 62a preferably corresponds to the annular gap defined between tubular radial wall 64c of outer casing 60 and tubular radial wall 68c of inner tubular sleeve 68.

Second chamber portion 62b is preferably delimited by the tubular radial wall 68c of inner tubular sleeve 68 and extends substantially coaxial to reference axis A. Second chamber portion 62a is preferably in fluid communication with outlet 56 and with outlet 58. In other words, second portion 62a preferably corresponds to the inner volume of inner tubular sleeve 68.

Filtering means 22, on the other hand, is preferably fluidly interposed between first chamber portion 62a and second chamber portion 62b, so that the hydraulic fluid coming from inlets 52 and 54 crosses filtering means before reaching outlets 56 and 58.

With reference to the exemplary embodiment illustrated in Figure 4, inner tubular sleeve 68 is preferably provided with one or more radial openings 68d, which are realized on the tubular radial wall 68c of the same inner tubular sleeve 68 and are adapted to put the inner volume of the inner tubular sleeve 68 in fluid communication with the outlet 58 of distribution manifold 50.

More in detail, distribution manifold 50 preferably comprises a supporting portion 70, which is carried by outer casing 60 and is adapted to carry the inner tubular sleeve 68 within the same outer casing 60.

More in detail supporting portion 70 is preferably tubular in shape, preferably extends coaxial to reference axis A and is preferably adapted to be fitted on the inner tubular sleeve 68.

In addition, supporting portion 70 is preferably carried by outer casing by means of an annular protruding flange 70, which extends cantilevered from the tubular wall 64c about outlet 58, in a direction orthogonal to reference axis A, and connects to the supporting portion 70.

With reference to the exemplary embodiment illustrated in Figure 4, supporting portion 70 and annular protruding flange 72 are shaped so as to define/delimit a closed channel which is adapted to put the opening 68d of inner tubular sleeve 68 in fluid communication with outlet 58.

In addition, supporting portion 70 and annular protruding flange 72 are further configured to fluidly isolate the opening 68d of inner tubular sleeve 68 from inlets 52 and 54 of the distribution manifold 50.

With reference to the exemplary embodiment illustrated in Figure 4, supporting portion 70 and annular protruding flange 72 preferably connect seamlessly to tubular radial wall 64c of casing 60.

In other words, supporting portion 70 and annular protruding flange 72 are preferably integral with tubular radial wall 64c of casing 60, i.e., they are realized in a single piece.

Clearly, outer casing 60, supporting portion 70 and/or annular protruding flange 72 may be separate and distinct components, and may be configured to be removably connected to each other.

With reference to the exemplary embodiment illustrated in Figure 4, passing now to the filtering means 22, they preferably comprises a cup-shaped body 80 adapted to be removably connected to the first end 64a of outer casing 60, and a filtering body 82, which is housed within the cup-shaped body 80 and adapted to filter the hydraulic fluid sucked within the same filtering means 22.

Filtering body 82 is preferably adapted to be fluidly interposed between the first chamber portion 62a and the second chamber portion 62b.

More in detail, the filtering body 82 comprises a filtering septum 84, which is preferably annular in shape, is preferably arranged coaxial to reference axis A and is adapted to be connected, preferably in an easily removable manner, to the first end 68a of inner tubular sleeve 68.

Filtering septum 84 preferably divides the inner volume of the cup-shaped body 80 in a first filtering chamber 80a arranged upstream filtering septum 84 and in fluid communication with first chamber portion 62a, and a second filtering chamber 80b arranged downstream filtering septum 84 and in fluid communication with first chamber portion 62b.

The operation of the above-described work vehicle 1 is the following.

Charging pump 18 is driven in rotation by engine 3, in order to suck hydraulic fluid from tank 6 and to provide a pressurized flow of the hydraulic fluid within the hydraulic distributor 50, though inlet opening 52, and then towards the inlets of hydraulic pumps 12a and 12b.

Hydraulic pumps 12a and 12b, in turn, are driven in rotation by engine 3 and provides at output, towards valve arrangement 10, a pressurized flow of the hydraulic fluid received from charging pump 18.

Then, part of the hydraulic fluid exiting from valve arrangement 10 is discharged to tank 6 via discharge line 28, and part of the hydraulic fluid exiting from valve arrangement 10 is routed back to pumping means 12 via the hydraulic recirculation line 34.

Therefore, the hydraulic fluid sucked from hydraulic pumps 12a and 12b in parts comes from the charging pump 18 and in parts comes directly from valve arrangement 10 via the recirculation line 34.

More in detail, the recirculation line 34 provides hydraulic fluid directly to pumping means 12 in order to provide sufficient charge flow rate even when the pumping means 12 (pump 12a and pump 12b) request is higher than the maximum flow rate available from the charging pump 18.

Accordingly, distribution manifold 50 dynamically distributes the hydraulic fluid coming from recirculation line 34 and from the outlet of charging pump 18 to the two hydraulic pumps 12a and 12b.

In view of the foregoing, the advantages of the hydraulic arrangement 5 and of the distribution manifold 50 are apparent.

At first, the modularity of hydraulic arrangement 5 and in particular provision of a plurality of pumping means 12 allows to increase the flowrate of the hydraulic fluid fed towards the valve arrangement 10, therefore being able to satisfy the requirement of largest and most modern work vehicles.

In addition, the provision of two or more independently controllable hydraulic pumps 12a and 12b allows increase the energy efficiency of hydraulic arrangement 5 and accordingly to reduce the fuel consumption of work vehicle 1, as the operation of each hydraulic pump 12a and 12b may be independently controlled according to the actual requirements of valve arrangement 10.

Moreover, the provision of two separate and distinct load sensing lines 15a and 15b, each operatively connected to a corresponding pump 12a and 12b allows to control the two pumps 12a and 12b independently to each other, according to the actual load demanded at the corresponding valve arrangement 10a and 10b. This clearly allows to reduce the power consumptions, as the two pumps 12a and 12b may operate with two different pressure levels according to the actual load required by the corresponding valve arrangement 10a and 10b.

The provision of the recirculation line 34 and of the distribution manifold 50 further allows to increase the number of hydraulic pumps 12 without the need to increase the number of associated charging pump 18, with all the benefit that this entails. Indeed, when the flowrate required by pumping means 12 exceeds the flowrate provided out output by charging pump 18, the missing flowrate is supplied directly from valve arrangement 10 via hydraulic recirculation line 34. In addition, by avoiding the need to increase the number of charging pumps 18, it is possible to minimize the installation impact of the new hydraulic arrangement 5 on the work vehicles.

Moreover, the arrangement of filtering means 22 along the recirculation line 34 allows to meet the hydraulic fluid filtration need required by pumping means 12.

Finally, the provision of banjo fittings on the interfaces of distribution manifold allows to increase the flexibility of the installation of the distribution manifold within the hydraulic arrangement 5.

As a matter of fact, the provision of banjo fitting allows to facilitate the mechanical connection between the distribution manifold, the hydraulic feed line 20, the hydraulic recirculation line 34 and the pumping means 12.

It is clear that modifications can be made to the described hydraulic arrangement 5, which do not extend beyond the scope of protection defined by the claims.

For example, the shape of the elements comprised by the hydraulic arrangement 5 may be varied according to the work vehicle necessities.

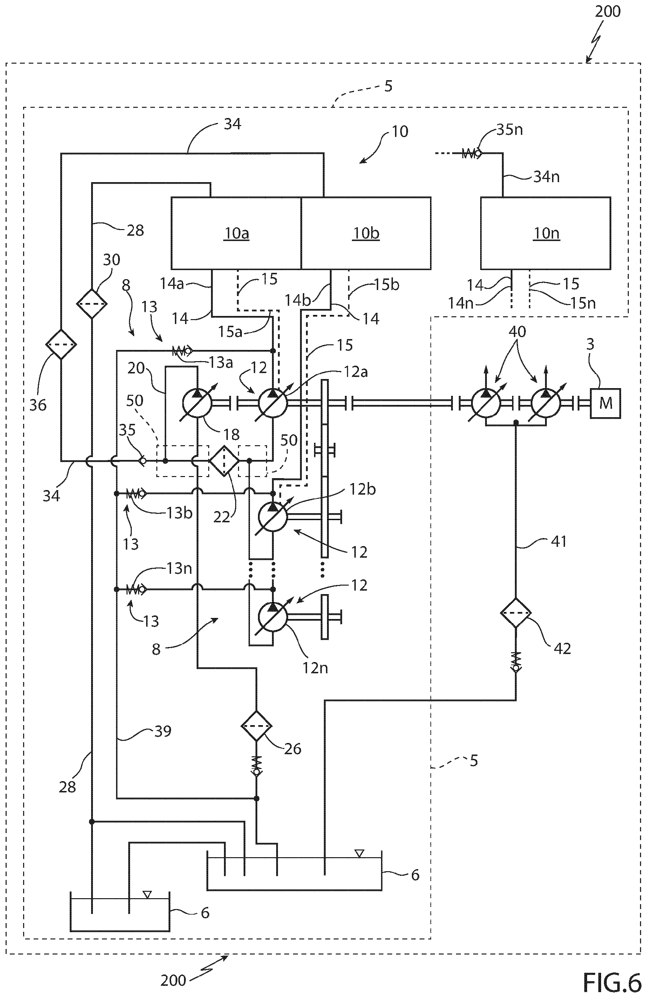

In addition, Figure 6 illustrates a further embodiment of work vehicle 1 denoted by reference number 200, which is similar to work vehicle 1 and whose corresponding parts will be denoted with the same reference numbers as work vehicle 1.

Work vehicle 200 distinguishes from work vehicle 1 in that pumping means 12 comprises a plurality of hydraulic pumps 12a, 12b, ..., 12n, which are arranged in parallel to each other and are adapted to be carried by engine 3.

Accordingly, hydraulic arrangement 5 may comprise as many associated delivery lines 14a, 14b, ..., 14n and/or as many associated load sensing lines 15a, 15b, ..., 15n and/or as many associated pressure relief valves 13a, 13b, ..., 13n.

In addition, according to such embodiment, hydraulic arrangement 5 comprises a recirculation line 34n fluidly connecting valve means 10n with the inlet of pumping means 12.

Preferably, hydraulic arrangement 5 preferably comprises a check valve 35n or non-return valve arranged along hydraulic recirculation line 34n, i.e. operatively interposed between valve means 10n and pumping means 12.

In addition, according to the embodiment illustrated in Figure 6, hydraulic distributor 50 comprises a plurality of outlets each connected to the inlet of a corresponding hydraulic pump 12.

Furthermore, valve arrangement 10 comprises a plurality of valve means 10a, 10b, ..., 10n, each fluidly connected to the outlet of a corresponding hydraulic pump 12a, 12b, ..., 12n.

## Claims

1. A distribution manifold (50) for a hydraulic arrangement (5),
said distribution manifold (50) comprising:
• an outer casing (60), which extends along a reference axis (A), is provided with a first inlet (52) and a second inlet (54) adapted to receive hydraulic fluid at inlet, a first outlet (56) and a second outlet (58) adapted to provide at outlet hydraulic fluid, and defines an inner chamber (62) adapted to put said first inlet (52), said second inlet (54), said first outlet (56) and said second outlet (58) in fluid communication to each other; and
• an inner tubular portion (68), which is arranged at least partially within the inner chamber (62) of said outer casing (60);
said inner tubular portion (68) being adapted to divide said inner chamber (62) in a first chamber portion (62a) in fluid communication with said first inlet (52) and said second inlet (54), and in a second chamber portion (64b) in fluid communication with said first chamber portion (64a) and with said first outlet (56) and said second outlet (58).

2. Distribution manifold according to claim 1, wherein said outer casing (60) is configured to carry filtering means (22) adapted to be fluidly interposed between said first chamber portion (62a) and said second chamber portion (62b).

3. Distribution manifold according to claim 1 or 2, wherein said inner tubular portion extends parallel to said reference axis (A), said first chamber portion (62a) is defined between said inner tubular portion (68) and said outer casing (60) and said second chamber portion (62b) is defined at least partially within said inner tubular portion (68).

4. Distribution manifold according to claim 1, 2 or 3, wherein said outer casing (60) is tubular in shape and comprises: a first axial end (64a) adapted to be connected to said filtering means (22); a second axial end (64b) opposite to said first axial end (64a); and a tubular wall (64c) extending about said reference axis (A) between said first axial end (64a) and said second axial end (64b).

5. Distribution manifold according to claim 4, wherein said second axial end (64b) comprises a coupling portion, which is adapted to be connected to a complementary shaped portion of a hydraulic line or a hydraulic pump in a removable and freely axially rotatable manner.

6. Distribution manifold according to any of the preceding claims, wherein said inner tubular portion (68) comprises a third axial end (68a), which is adapted to be fluidly connected to said filtering means (22), and a fourth axial end (68b), opposite to said first axial end 68a.

7. Distribution manifold according to claim 6, wherein said fourth axial end (68b) comprises a coupling portion, which is adapted to be connected to a complementary shaped portion of a hydraulic line or a hydraulic pump in a removable and freely axially rotatable manner.

8. Distribution manifold according to claim 6 or 7, wherein said first inlet (52) is defined by the annular gap delimited between said second end (64b) and said inner tubular portion (68), said second inlet is defined by an opening realized in said tubular wall (64c) and in fluid communication with said first chamber portion (62a), said first outlet (56) is defined by said third end (68b) of said inner tubular portion (68), and said second outlet (58) is defined by an opening realized in said tubular wall (64c) and in fluid communication with said second chamber portion (62b).

9. Distribution manifold according to claim 8, wherein said second outlet (58) is defined by a protruding conduit (59), which extends cantilevered from said tubular wall (64c) of said outer casing (60) and lays on a plane orthogonal to said reference axis (A).

10. Distribution manifold according to any of the preceding claims, further comprising: a supporting portion (70), which is carried by said outer casing (60) and is adapted to carry the said inner tubular portion (68); and an annular protruding flange (70), which extends cantilevered from said tubular wall (64c) about said second outlet (58), in a direction orthogonal to said reference axis (A), and connects to said supporting portion (70).

11. Distribution manifold according to claim 10, wherein inner tubular portion (68) is provided with one or more radial openings (68d), which are adapted to put said second chamber portion (62b) in fluid communication with said second outlet (58);
said supporting portion (70) and said annular protruding flange (72) are shaped so as to define/delimit a closed channel which is adapted to put the said radial openings (68d) in fluid communication with said second outlet (58).

12. Distribution manifold according to claim 11, wherein said supporting portion (70) and said annular protruding flange (72) are realized in a single piece with said tubular wall (64c) of said outer casing (60).

13. A hydraulic arrangement (5) comprising for a work vehicle (1, 200),
said hydraulic arrangement (5) being adapted to be operatively connected to a hydraulically actuated work implement carried by said work vehicle (1, 200), in order to provide pressurized hydraulic fluid to operate said hydraulically actuated work implement,
wherein said hydraulic arrangement (5) comprises: a pumping assembly (8), which is configured to suck hydraulic fluid from a tank (6) and to provide at outlet a pressurized flow of said hydraulic fluid; and a valve arrangement (10), which is fluidly connected downstream said pumping assembly (8) and is adapted to be fluidly connected to said hydraulically actuated work implement;
wherein said pumping assembly (8) comprises:
• pumping means (12), which are connected upstream said valve arrangement (10) via a hydraulic delivery line (14), and are configured to feed the pressurized flow of hydraulic fluid towards said valve arrangement (10); and
• a charging pump (18), which is connected upstream said pumping means (12) via a hydraulic feed line (20), and is configured to suck hydraulic fluid from said tank (6) and to provide a pressurized flow of hydraulic fluid towards the inlet of said pumping means (12);
wherein said pumping means (12) comprises two hydraulic pumps (12a, 12b), which are arranged in parallel to each other and are each fluidly connected to said valve arrangement (10);
said hydraulic arrangement (5) further comprising:
• a hydraulic return line (28), which fluidly connects said valve arrangement (10) with said tank (6); and
• a hydraulic recirculation line (34), which fluidly connects said valve arrangement (10) with the inlet of said pumping means (12); and
• a distribution manifold (50) realized according to any of the preceding claims.

14. Hydraulic arrangement (5) according to claim 13, wherein said first inlet (52) is fluidly connected to the outlet of said charging pump (18), said second inlet (54) is fluidly connected to said recirculation line (34), said first outlet (56) is fluidly connected to one of said hydraulic pumps (12a, 12b), and said second outlet (58) is fluidly connected to the other one (12b) between said hydraulic pumps (12a, 12b).
